# EUROPEAN PATENT SPECIFICATION

(11) **EP 3 636 998 B1**
(45) Date of publication and mention of the grant of the patent: **07.12.2022**
(21) Application number: 18200029.9
(22) Date of filing: 12.10.2018
(51) Int. Cl.: F23G 5/16, F23G 5/04, F23J 13/08

(54) **AN APPARATUS AND A METHOD FOR COMBUSTION OF WASTE**
VORRICHTUNG UND VERFAHREN ZUR VERBRENNUNG VON ABFALL
APPAREIL ET PROCÉDÉ DE COMBUSTION DE DÉCHETS

(43) Date of publication of application: 15.04.2020
(73) Proprietor: Digital Concepts Company Limited, Wan Chai (HK)
(72) Inventor: ESENIN, Sergey, 119071 Moscow (RU); DAUER, Olaf, 26441 Jever (DE); SAMOILOV, Valentin, 141900 Dubna, Moscow region (RU); VASILIV, Sergei, 129281 Moscow (RU)
(74) Representative: Plasseraud IP

(56) References cited:
- EP-A1- 0 918 192
- US-A- 4 870 910
- US-A- 4 924 785
- US-A1- 2011 067 611

## Description

The invention relates to the field of waste burning especially to an apparatus and a method for the eliminating formation of toxins during the combustion process.

Thermal waste destruction leads to the formation of toxic substances such as dioxins and furans together with combustion gas, fly ash, and even slag. These chemicals are among the most harmful and hazardous chemicals known.

It is known that the dioxins and furans are chemical pollutants, which are formed from combustion of organic compounds or chlorine-containing compounds and escape into the environment via exhaust gases from such waste-burning facilities. These chemicals pose a serious threat to life. These chemicals persist in the environment for a long time with a revealed half-life in soil and sediments extending to years. Further, materials containing chlorine either organic or inorganic form a higher level of dioxins than material without chlorine. It is highly advantageous to eliminate the formation of dioxins and furans in the apparatus itself than to treat or remove these toxins.

Patent RU 2 479 792 C1 relates to a method and a device for burning solid organic wastes to suppress formation of toxic substances. The burning of the organic waste is carried out in a controlled temperature and pressure environment. Thereby suppressing the formation of the harmful toxins in the composition of the combustion gas. This document disadvantageously teaches a fixed nozzle, which restricts the area in which the combustion gas is cooled. Hence, it fails to provide a size variable region for cooling the combustion gas of the waste burning process. Hence, it restricts the system to limited parameters to arrive the rapid cooling. A further disadvantage of not using the heat energy is the resultant gas. EP 0 918 192 A1 discloses an apparatus and a method having the features of the preamble of claim 1 and of claim 5 respectively.

The object of the present invention is to eliminate the formation of harmful chemicals from the combustion of waste by overcoming the above-mentioned drawbacks.

A further object of the present invention is to provide a region with an adjustable nozzle to achieve rapid cooling of the resultant gas of the combustion. The cooling time must be shorter than the catalytic formation time of the harmful toxins.

It is another object of the invention to utilize the heat energy of the combustion process.

The objects are solved by the features of the independent claims. Further, the dependent claims claim features of additional developments.

According to the first aspect of the invention, an apparatus for combustion of waste comprises of at least one combustion chamber, a nozzle mounted in an ejection zone, and a cooling channel configured to supply a coolant into the nozzle. The nozzle is adjustable.

According to the first preferred implementation form of the first aspect, the nozzle is movable linearly and/or pivotally. The movement of the nozzle is advantageously achieved either in a linear or pivotal manner. It is highly advantageous to adjust the nozzle to control the pressure and flow rate of the product of combustion. The combustion gas is hereinafter designated as resultant gas. According to the second preferred implementation form of the first aspect, an afterburning chamber is located at the exit of the combustion chamber. The afterburning chamber is advantageously located at the exit of the combustion chamber in order to achieve a high-pressure of the resultant gas. It is highly advantageously to increase the resultant gas pressure to achieve rapid cooling. For this purpose, pressurized air is supplied to the inlet of the afterburning chamber.

According to the third preferred implementation form of the first aspect, the cooling channel opens into the nozzle within the ejection zone. A coolant is directly supplied into the nozzle. Thereby, the coolant temperature can be optionally controlled before feeding into the nozzle.

According to a further preferred implementation form of the first aspect, the apparatus comprises a thermal energy recuperation zone. As a further implementation, the thermal energy recuperation zone has an exhaust. More preferably, the exhaust is located at the top of the thermal energy recuperation zone. In order to achieve clean exhaust gas with an acceptable temperature, the resultant gas is advantageously further cooled in the thermal energy recuperation zone. The thermal energy recuperation zone preferably can provide additional facilities to further lower the temperature of the resultant gas.

According to the invention, the apparatus comprises a plurality of combustion chambers fixed on a rotatable wheel. In order to continuously burn the waste, several combustion chambers can be used. It is highly advantageously to mount them on the rotatable wheel thereby the combustion chamber can be changed efficiently once the burning of waste in one chamber is complete.

According to the second aspect of the invention, a method for combustion of waste comprises the steps: burning the waste, allowing a resultant gas to pass against a nozzle, and rapidly cooling the resultant gas passing against the nozzle with the coolant from the cooling channel. The adjustable nozzle creates a controllable gap, which aids to control the pressure of the resultant gas, control the rate of outflow of gases and the final chemical reaction.

According to the first preferred implementation form of the second aspect, the method steps involve burning the waste in the combustion chamber at a temperature up to 1500°C and/or at the pressure of 0.8 to 1.0 MPa. With such high combustion temperature several types of waste can be burnt in the combustion chamber. Thereby increasing the versatility of the apparatus. Further, the higher pressure of the resultant gas enables complete combustion of the wastes.

According to the second preferred implementation form of the second aspect, the method steps involve producing resultant gas from the combustion process and flowing of the resultant gas through an afterburning chamber. The afterburning chamber advantageously allows resultant gas to gain higher pressure. Therefore, the resultant gas flows against the nozzle with higher pressure resulting in a higher cooling efficiency.

According to the third implementation, form of the second aspect, displacing the nozzle linearly and/or pivotally to control the flow of the resultant gas is preferred. The nozzle is advantageously moved to create a gap necessary to achieve both rapid cooling of the resultant gas and controlling the chemical reaction.

According to a further preferred implementation form of the second aspect, the method step involves dispersing the coolant by the nozzle onto the resultant gas in order to cool it rapidly. More preferably, a fine dispersion of coolant is ejected from the nozzle onto the resultant gas. This advantageously helps in the formation of a vapour-gas mixture.

According to a further preferred implementation form of the second aspect, the method steps involve supplying the air for combustion by a compressor and/or exhausting the resultant gas through the thermal energy recuperation zone. The pressure of the resultant gas can advantageously be increased by a supply of pressurized air at the inlet of the afterburning chamber.

According to a further preferred implementation form of the second aspect, the method steps involve measuring a change in voltage near the nozzle to determine the type of the resultant gas exiting the nozzle. The analyses of the resultant gas provide a knowledge of the presence of any toxins. Thereby, the apparatus is more efficiently controlled to achieve a clean exhaust gas.

According to a further preferred implementation form of the second aspect, the method steps involve controlling the movable nozzle by an actuator via a control unit.

According to a further preferred implementation form of the second aspect, the method steps involve generating electrical energy by a generator driven by a turbine from the heat of the combustion process.

According to a further preferred implementation form of the second aspect, the method steps involve storing the electrical energy in an energy storage device and/or powering the apparatus with the electrical energy. The heat energy of the resultant gas is effectively harvested and used or stored.

According to a further preferred implementation form of the second aspect, the method steps involve loading the waste in a drying zone via an openable door, drying the waste in the drying zone and pressing the waste into desired size and shape. More preferably, the heat energy of the resultant gas can be used for drying the waste. The pre-treatment of the waste is highly advantageous to enable more efficient burning of the waste. Moreover, the pre-treatment is done in a self-sustainable manner by using the energy generated from the apparatus.

According to a further preferred implementation form of the second aspect, the method steps involve allowing ambient air flowing into the drying zone. The drying of fresh waste can be achieved more effectively by allowing the ambient air into the chamber.

According to the invention, the method steps involve automatically changing different combustion chambers fixed on a rotatable wheel. Thereby the replacement of the empty combustion chamber is quick.

Exemplary embodiments of the invention are now further explained with regard to the drawings by way of example only and not for limitation.

In the following exemplary embodiments of the invention are described with reference to the drawings. Those exemplary embodiments do not limit the scope of the invention. The same reference signs in different drawings indicate the same elements that have the same functions unless otherwise stated. In the drawings:
- Fig. 1: shows an embodiment of the apparatus for the combustion of waste according to the present invention;
- Fig. 2: shows an embodiment of the nozzle with a linear movement according to the present invention;
- Fig. 3a: shows an embodiment of the nozzle with a pivotal movement according to the present invention;
- Fig. 3b: shows an embodiment of the nozzle with pivotal movement displacing the nozzle according to the present invention;
- Fig. 4: shows an embodiment of a measuring system of the present invention to determine the harmful chemicals in the resultant gas;
- Fig. 5: shows a cross-sectional view of a rotatable wheel loaded with four combustion chamber according to another embodiment of the present invention and
- Fig. 6: shows a flowchart of the steps in waste burning the waste according to an embodiment of the present invention.

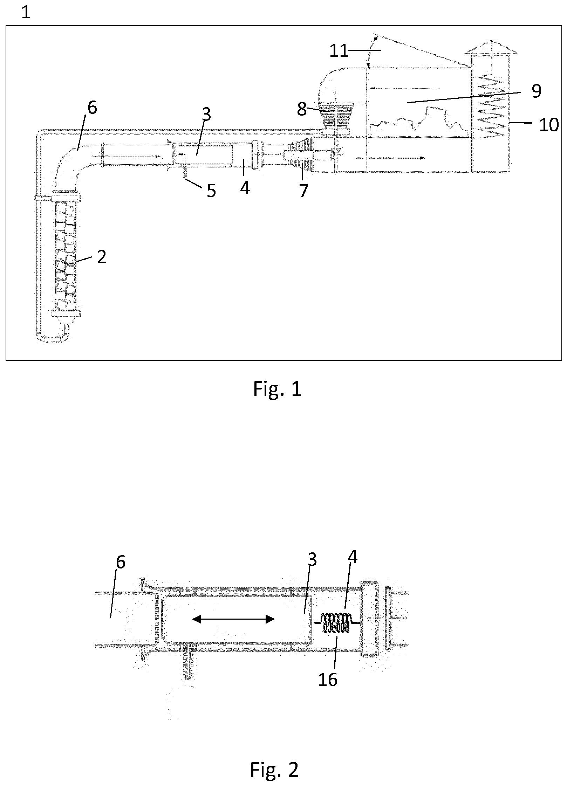

In Fig. 1, an embodiment of the apparatus for combustion of waste according to the present invention is shown. The apparatus 1 for burning waste according to the present invention comprises at least one combustion chamber 2, a nozzle 3 mounted in an ejection zone 4, and a cooling channel 5. It is highly advantageous that the nozzle 3 is adjustable.

The apparatus 1 of the present invention is capable of burning any type of waste. By preference, the waste can be organic or inorganic such as paper, wood, food, polyvinyl chloride, polyvinylidene chloride, polyethylene, polystyrene, NaCl, KCl, etc.. By a further preference, the waste can be from domestic, hospitals or industrial. A further preference is that the waste can be solid or semisolid.

According to the invention, the nozzle 3 of the apparatus 1 can move linearly and/or pivotally. It is further preferable to achieve the moment of the nozzle 3 by use of a spring (shown in Fig. 2).

The apparatus 1 has an afterburning chamber 6 located at the exit of the combustion chamber 2. As the waste burns in the combustion chamber 2. It flows into the afterburning chamber 6.

By preference, the nozzle 3 creates an adjustable gap between the afterburning chamber 6 and itself. The resultant gas is rapidly cooled in this gap by appropriately adjusting the position of the nozzle 3. Also by the position of the nozzle 3 the pressure in the combustion chamber 2 is controlled. At the beginning of each combustion, the outlet is more or less closed allowing the pressure to raise quickly. As the combustion proceeds further, the nozzle 3 is more and more opened allowing the resultant gas to escape.

The combustion process in the combustion chamber 2 is preferably carried out at a temperature up to 1500°C. It is further preferable that the combustion is carried out at a pressure of 0.8-1.0 MPa. In order to ensure the complete combustion of the waste in the combustion chamber 2, air is supplied at the pressure of 0.8-1.0 MPa at the inlet of the afterburning zone 6. A compressor 8 can preferably adjust the flow rate of the air. Hence, the complete combustion of the waste especially of the solid particles is achieved.

The apparatus 1 has a cooling channel 5 that supplies the coolant into the nozzle 3. In this case, the coolant can be sprayed onto the resultant gas through the adjustable nozzle 3. By preferably adjusting the gap between the afterburning zone 6 and the nozzle 3 the resultant gas can be efficiently and rapidly cooled. By a further preference, the spray rate of the coolant can be adjusted as desired.

In the initial position, preferably the nozzle 3 hermetically seals the combustion chamber 2 and the afterburning chamber 6.

The onset of combustion produces the resultant gas and it rises into the afterburning chamber 6 from the combustion chamber 2. The resultant gas flows towards the nozzle 3. In response, the nozzle 3 starts to spray the coolant and moves to clear the gap, accordingly. Through one or more ejecting hole(s) in the nozzle 3, the coolant is sprayed, preferably as a finely dispersed coolant. By preference, an additional negative potential is applied to the nozzle 3 with regard to the ejecting holes of the nozzle for intensifying the combustion process. A part of the nozzle 3 to which the potential is applied is advantageously separated from the ejecting holes galvanically.

It is further preferable that the coolant is water or gas or other coolants. The coolant rapidly cools the resultant gas and more preferably controls the chemical reaction with production of vapor-gas mixtures stream.

The resultant gas further flows towards the ejection zone 4 in which it mixes with atmospheric air and further decreases its temperature in a time shorter than the catalytic formation time of the dioxins.

It is further advantageous to recover the heat energy of the resultant gas to generate electricity by using a generator driven by a turbine 7 at the end of the ejection zone 4. The generated electricity can advantageously be used to power the apparatus 1 or to be stored in an energy storage system such as supercapacitors.

From the ejection zone, the vapor-gas mixture stream goes to a thermal energy recuperation zone 10. The drying zone 9 preferably has a door on the top for loading fresh waste. A drying zone 9 contains waste destined for combustion and advantageously pretreats the waste for combustion. In a thermal energy recuperation zone 10, the thermal energy of the vapor-gas stream warms the atmospheric air, which is supplied to the drying zone 9, combustion zone 2 and to the inlet of the afterburning zone 6 with a temperature of 350-400°C through the compressor 8.

The vapor-gas mixture further by preference flows into the thermal energy recuperation zone 10, which further lowers the temperature before it exits the apparatus. The thermal energy recuperation zone 10 is preferably located in flowing direction behind a drying zone 9. Hence, the gas that exits the apparatus 1 of the present invention is harmless and has an acceptable exhaust temperature.

Furthermore, it is advantageous and preferable to pretreat and compress the waste. The waste is pretreated by heating, pressing, and cutting into desired size and dimension. By further preference, the size of the prepared compressed waste is not more than 100 mm in size on any given side.

In order to load the combustion chamber 2 with a fresh load of waste, the afterburning chamber 6 is preferably isolated from the combustion chamber 2. The combustion chamber can be either mechanically or manually reloaded.

The Fig. 2 shows an exemplary embodiment of the nozzle 3 according to the present invention. The adjustable nozzle 3 in Fig. 2 is linearly displaceable against sprint 16 as marked by the double-headed arrow. Initially, the nozzle 3 hermetically seals the exit of the afterburning chamber 6. According to Fig. 2, the nozzle 3 preferably moves along the gas-flow channel linearly as the resultant gas is produced.

It is further preferred that the resultant gas cools rapidly without enough time for the formation of dioxins or furans in the gas stream. For this purpose, the resultant gas that flows from the afterburning chamber 6 towards the nozzle 3 is sprayed with a finely dispersed coolant. The adjustable nozzle 3 is highly advantageous for both cooling the resultant gas and controlling the chemical reaction to produce a vapor-gas mixture.

Further, it is preferred that the nozzle 3 is adjusted in such a manner that the circular space between the afterburning chamber 6 and the nozzle 3 is dimensioned in a manner to maintain the same gas flow rate and to ensure a transit time of the vapor-gas mixture from the bottom of the combustion chamber 2 to the nozzle 3 to be not more than 0.1 ms.

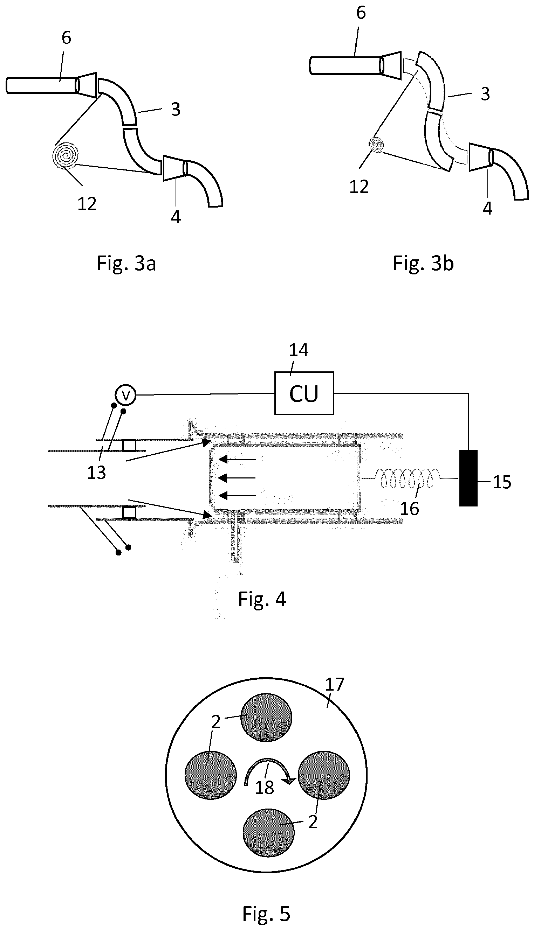

As an alternative, Fig. 3a and Fig. 3b both show an exemplary embodiment of the pivotal displacement of the nozzle 3. Fig. 3a shows that the movement of the nozzle 3 is controlled by the winding spring 12. The adjustable nozzle 3 can be pivotally moved to be either in complete contact, partial contact or not in contact with the outlet of the afterburning zone 6 and the ejection zone 4. The space from the afterburning zone 6 to the ejection zone 4 can be advantageously controlled in order to rapidly cool the resultant gas. Thereby the advantageously rapid cooling can be achieved.

On the other hand, Fig. 3b shows that the winding spring 12 can be wound in such a manner that the connection between the afterburning chamber 6 and the ejection zone 4 is restricted thereby achieving increased cooling of the resultant gas.

Fig. 4 shows a measuring and control system to determine the presence of the harmful chemicals in the resultant gas according to the present invention. It is preferable that the resultant gas is analyzed thoroughly before it exits the apparatus. The voltage across the electrodes 13 is changing for additional saturation in the combustion zone with electrons and control the quality of the combustion process as shown in Fig. 4. The electrodes can be advantageously positioned at the end of the afterburning zone 6 and/or across the afterburning zone 6 and the nozzle 3. This is compared with the existing database of harmful substances in a control unit 14. Further, it is preferable that the control unit 14 controls the spring 12 or 16 via an actuator 15.

Depending on the type of the resultant gas observed, the control unit 14 can control the position of the adjustable nozzle 3. When the system does not have any harmful resultant gases, the control unit 14 moves the adjustable nozzle 3 via the spring 16 by reducing the force on the spring 16 pressed by the actuator 15 in order to allow the resultant gas to flow towards the ejection zone 4. On the other hand, when harmful gases are found in the system, the control unit 14 raises an alarm to the user, stops further combustion process and blocks the exit for the resultant gas. Therefore, the user can change the combustion parameters such as temperature and/or pressure and/or flow rate of the resultant gas and/or spray rate of the coolant in a manner to avoid the formation of the harmful gases.

Fig. 5 shows an embodiment according to the invention to accommodate a plurality of the combustion chambers 2. Fig. 5 shows the cross-section of a rotatable wheel 17 for several combustion chambers 2, which are arranged in a revolver fashion. When the waste in the combustion chamber 2 is completely burnt, a new combustion chamber 2 can be advantageously switched without much time delay. The rotation of the wheel 17 can be automatized to replace the empty combustion chamber 2. The wheel 17 is turned in the direction 18.

The apparatus 1 can be automated to control combustion, analysis, movement and loading of raw material for combustion.

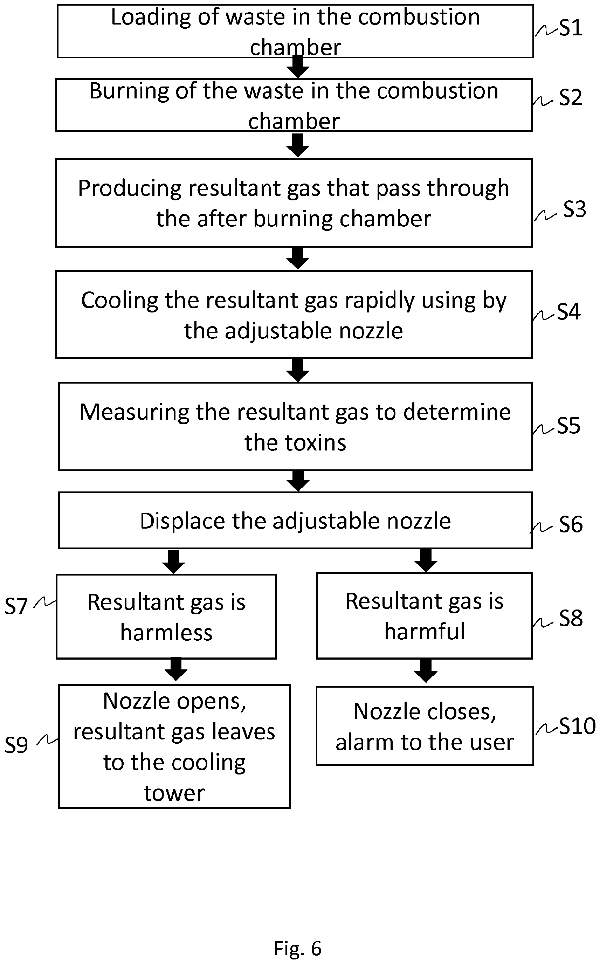

Fig. 6 shows the flowchart of the preferred step involved in burning the waste. The first step S1 involves loading of the waste in the combustion chamber 2. The wastes are pre-treated, compressed and cut into the desired dimension. They are then loaded into the combustion chamber 2. In the second step S2, the waste in the combustion chamber 2 is burnt. In the third step is S3, the combustion gas namely the resultant gas is produced from the combustion. In the fourth step S4, the coolant from the adjustable nozzle 3 rapidly cools the resultant gas. In the fifth step 5, the resultant gas is analyzed by measuring the change in voltage across the electrodes in order to determine whether the resultant gas is devoid of toxins.

In the sixth step S6, the adjustable nozzle 3 is displaced in response to the presence of toxin from the analysis of the previous step. In seventh step S7 and eighth S8, it is either determined that the resultant gas is harmless or harmful containing the toxins listed in the database. In case, the resultant gas does not include any toxic chemicals then the control unit 14 proceeds to the ninth step S9 allowing the flow of the resultant gas towards the thermal energy recuperation zone 10. On the other hand, if the resultant gas has any dangerous toxins then the control unit 14 follows the tenth step S10. In S10 the nozzle 3 is closed and the system raises an alarm to the user. By preference, the information regarding the harmful substances is displayed to the user. The user can advantageously change the parameters for burning the waste and/or cooling rate of the resultant gases in order to avoid the toxins in the resultant gas.

All features of all embodiments described, shown and/or claimed herein can be combined with each other.

While various embodiments of the present invention have been described, it should be understood that they have been presented as a way of example only, and not limitation. Numerous changes to the disclosed embodiments can be made in accordance with the disclosure herein without departing from the scope of the invention. Thus, the breadth and scope of the present invention should not be limited to any of the above-described embodiments. Rather the scope of the invention should be defined in accordance with the following claims and their equivalents.

Although the invention has been illustrated and described with respect to one or more implementations, equivalent alternations and modifications will occur to others skilled in the art upon the reading and understanding of the specification annexed drawings. In addition, while a particular feature of the invention may have in disclosed with respect to only one of the several implementations, such features may be combined with one or more other features of implementations as may be described in advantageous for any given our particular application.

## Claims

1. An apparatus (1) for combustion of waste comprising
at least one combustion chamber (2) configured to burn the waste,
a nozzle (3) mounted in an ejection zone (4),
the nozzle (3) is configured to allow a resultant gas to pass against the nozzle (3),
a cooling channel (5) configured to supply a coolant into the nozzle (3), and
the nozzle (3) is adjustable,
**characterized in that**
a plurality of the combustion chambers (2) is fixed on a rotatable wheel (17).

2. The apparatus (1) according to claim 1,
wherein the nozzle (3) is moveable linearly and/or pivotally.

3. The apparatus (1) according to claim 1 or 2,
wherein an afterburning chamber (6) is located at the exit of the combustion chamber (2) and/or
wherein the cooling channel (5) opens into the nozzle (3) within the ejection zone (4).

4. The apparatus (1) according to claim 1,
comprising a thermal energy recuperation zone (10) and
wherein an exhaust is located at the top of the thermal energy recuperation zone (10).

5. A method for combustion of waste comprising the following steps:
burning the waste in at least one combustion chamber (2),
allowing a resultant gas pass through an adjustable nozzle (3),
rapidly cooling the resultant gas passing through the nozzle (3) with a coolant from a cooling channel (5),
and adjusting the adjustable nozzle (3),
**characterised by**
automatically changing different combustion chambers (2) fixed on a rotatable wheel (17).

6. The method for combustion of waste according to claim 5,
having the additional step(s) of:
burning the waste in a combustion chamber (2) at a temperature up to 1500°C and/or
burning the waste at a pressure of 0.8 to 1.0 MPa,
whereby producing the resultant gas from the combustion.

7. The method for combustion of waste according to claim 5 or 6,
having the additional step(s) of:
flowing of the resultant gas through an afterburning chamber (6) and/or
displacing the nozzle (3) linearly and/or pivotally to control the flow of the resultant gas and/or
dispersing the coolant by the nozzle (3) onto the resultant gas to cool rapidly.

8. The method for combustion of waste according to any of claims 5 to 7,
having the additional step(s) of:
supplying air for combustion by a compressor (8) and/or
exhausting the resultant gas through a thermal energy recuperation zone (10).

9. The method for combustion of waste according to claims any of 5 to 8,
having the additional step of:measuring a change in voltage across the electrodes (13) provided near the nozzle to determine the type of the resultant gas flowing through the nozzle (3).

10. The method for combustion of waste according to any of claims 5 to 9,
having the additional step of:
controlling the movable nozzle (3) by an actuator (15) via a control unit (14).

11. The method for combustion of waste according to any of claims 5 to 10,
having the additional step(s) of:
generating electrical energy by a turbine (7) from the heat energy of the resultant gas and
storing electrical energy produced by a generator driven by the turbine (7) in an energy storage apparatus and/or
powering the apparatus (1) with the electrical energy produced by the generator driven by the turbine (7).

12. The method for combustion of waste according to any of claims 5 to 11,
having the additional step(s) of:
loading the waste in a drying zone (9) via an openable flap (11) and/or
drying the waste in a drying zone (9) using the heat energy of the resultant gas and/or shaping the waste into desired size and shape.

13. The method for combustion of waste according to claim 12,
having the additional step of:
allowing ambient air to flow into the drying zone (9) .

## Patentansprüche

1. Vorrichtung (1) zur Verbrennung von Müll, umfassend
wenigstens eine Brennkammer (2), welche dazu eingerichtet ist, den Müll zu verbrennen,
eine Düse (3), welche in einer Ausstoßzone (4) montiert ist,
wobei die Düse (3) dazu eingerichtet ist, einem resultierenden Gas zu erlauben, gegen die Düse (3) zu passieren,
einen Kühlkanal (5), welcher dazu eingerichtet ist, ein Kühlmittel in die Düse (3) zuzuführen, und
wobei die Düse (3) einstellbar ist,
**dadurch gekennzeichnet, dass**
eine Mehrzahl der Brennkammern (2) an einem rotierbaren Rad (17) fixiert ist.

2. Vorrichtung (1) nach Anspruch 1, wobei die Düse (3) linear und/oder schwenkbar bewegbar ist.

3. Vorrichtung (1) nach Anspruch 1 oder 2,
wobei eine Nachbrennkammer (6) an dem Austritt der Brennkammer (2) angeordnet ist und/oder
wobei der Kühlkanal (5) in die Düse (3) innerhalb der Ausstoßzone (4) mündet.

4. Vorrichtung (1) nach Anspruch 1,
umfassend eine Rekuperationszone (10) thermischer Energie und
wobei ein Auslass an der Oberseite der Rekuperationszone (10) thermischer Energie angeordnet ist.

5. Verfahren zur Verbrennung von Müll, umfassend die folgenden Schritte:
Verbrennen des Mülls in wenigstens einer Brennkammer (2),
wobei einem resultierenden Gas erlaubt wird, eine einstellbare Düse (3) zu passieren, schnelles Kühlen des resultierenden Gases, welches die Düse (3) passiert, mit einem Kühlmittel aus einem Kühlkanal (5),
und Einstellen der einstellbaren Düse (3),
**gekennzeichnet durch**
automatisches Ändern verschiedener Brennkammern (2), welche an einem rotierbaren Rad (17) fixiert sind.

6. Verfahren zur Verbrennung von Müll nach Anspruch 5, welches den/die zusätzlichen Schritt/Schritte aufweist:
Verbrennen des Mülls in einer Brennkammer (2) bei einer Temperatur von bis zu 1500 °C und/oder
Verbrennen des Mülls bei einem Druck von 0,8 bis 1,0 MPa,
wobei das resultierende Gas aus der Verbrennung erzeugt wird.

7. Verfahren zur Verbrennung von Müll nach Anspruch 5 oder 6, welches den/die zusätzlichen Schritt/Schritte aufweist:
Strömen des resultierenden Gases durch eine Nachbrennkammer (6) und/oder
Verlagern der Düse (3) linear und/oder schwenkbar, um die Strömung des resultierenden Gases zu steuern, und/oder
Dispergieren des Kühlmittels durch die Düse (3) auf das resultierende Gas, um schnell zu kühlen.

8. Verfahren zur Verbrennung von Müll nach einem der Ansprüche 5 bis 7, welches den/die zusätzlichen Schritt/Schritte aufweist:
Zuführen von Luft für eine Verbrennung durch einen Kompressor (8) und/oder
Auslassen des resultierenden Gases durch eine Rekuperationszone (10) thermischer Energie.

9. Verfahren zur Verbrennung von Müll nach einem der Ansprüche 5 bis 8, welches den zusätzlichen Schritt aufweist:
Messen einer Änderung in einer Spannung über den Elektroden (13), welche in der Nähe der Düse bereitgestellt sind, um den Typ des resultierenden Gases zu bestimmen, welcher durch die Düse (3) strömt.

10. Verfahren zur Verbrennung von Müll nach einem der Ansprüche 5 bis 9, welches den zusätzlichen Schritt aufweist:
Steuern der bewegbaren Düse (3) durch einen Aktuator (15) über eine Steuereinheit (14).

11. Verfahren zur Verbrennung von Müll nach einem der Ansprüche 5 bis 10, welches den/die zusätzlichen Schritt/Schritte aufweist:
Erzeugen elektrischer Energie durch eine Turbine (7) aus der Wärmeenergie des resultierenden Gases und
Speichern elektrischer Energie, welche durch einen Generator erzeugt wird, welcher durch die Turbine (7) angetrieben wird, in einer Energiespeichervorrichtung und/oder Antreiben der Vorrichtung (1) mit der elektrischen Energie, welche durch den Generator erzeugt wird, welcher durch die Turbine (7) angetrieben wird.

12. Verfahren zur Verbrennung von Müll nach einem der Ansprüche 5 bis 11, welches den/die zusätzlichen Schritt/Schritte aufweist:
Laden des Mülls in eine Trocknungszone (9) über eine öffenbare Klappe (11) und/oder Trocknen des Mülls in einer Trocknungszone (9) unter Verwendung der Wärmeenergie des resultierenden Gases und/oder
Formen des Mülls in gewünschte Form und Größe.

13. Verfahren zur Verbrennung von Müll nach Anspruch 12, welches den zusätzlichen Schritt aufweist:
Erlauben, dass Umgebungsluft in die Trocknungszone (9) strömt.

## Revendications

1. Appareil (1) de combustion de déchets comprenant
au moins une chambre de combustion (2) configurée pour brûler les déchets,
une buse (3) montée dans une zone d'éjection (4),
la buse (3) est configurée pour permettre à un gaz résultant de passer contre la buse (3),
un canal de refroidissement (5) configuré pour distribuer un liquide de refroidissement dans la buse (3), et
la buse (3) est ajustable,
**caractérisé en ce que**
une pluralité de chambres de combustion (2) est fixée sur une roue rotative (17).

2. Appareil (1) selon la revendication 1,
dans lequel la buse (3) est mobile linéairement et/ou de manière pivotante.

3. Appareil (1) selon la revendication 1 ou 2,
dans lequel une chambre de postcombustion (6) est située à la sortie de la chambre de combustion (2) et/ou
dans lequel le canal de refroidissement (5) s'ouvre dans la buse (3) à l'intérieur de la zone d'éjection (4).

4. Appareil (1) selon la revendication 1,
comprenant une zone de récupération d'énergie thermique (10) et
dans lequel un échappement est situé au sommet de la zone de récupération d'énergie thermique (10).

5. Procédé de combustion de déchets comprenant les étapes suivantes :
le brûlage des déchets dans au moins une chambre de combustion (2),
la permission à un gaz résultant de passer à travers une buse (3) ajustable,
le refroidissement rapide du gaz résultant passant à travers la buse (3) avec un liquide de refroidissement provenant d'un canal de refroidissement (5), et
l'ajustement de la buse (3) ajustable,
**caractérisé par**
le changement automatique de différentes chambres de combustion (2) fixées sur une roue rotative (17).

6. Procédé de combustion de déchets selon la revendication 5,
comportant les une ou plusieurs étapes supplémentaires suivantes :
le brûlage des déchets dans une chambre de combustion (2) à une température jusqu'à 1500 °C et/ou
le brûlage des déchets à une pression de 0,8 à 1,0 MPa,
en produisant de ce fait le gaz résultant à partir de la combustion.

7. Procédé de combustion de déchets selon la revendication 5 ou 6,
comportant les une ou plusieurs étapes supplémentaires suivantes :
l'écoulement du gaz résultant à travers une chambre de postcombustion (6) et/ou le déplacement de la buse (3) linéairement et/ou de manière pivotante pour commander l'écoulement du gaz résultant et/ou la dispersion du liquide de refroidissement par la buse (3) sur le gaz résultant pour le refroidir rapidement.

8. Procédé de combustion de déchets selon l'une quelconque des revendications 5 à 7, comportant les une ou plusieurs étapes supplémentaires suivantes :
la distribution d'air pour une combustion par un compresseur (8) et/ou l'échappement du gaz résultant à travers une zone de récupération d'énergie thermique (10).

9. Procédé de combustion de déchets selon l'une quelconque des revendications 5 à 8, comportant l'étape supplémentaire suivante : la mesure d'un changement de tension à travers les électrodes (13) prévues à proximité de la buse pour déterminer le type du gaz résultant s'écoulant à travers la buse (3).

10. Procédé de combustion de déchets selon l'une quelconque des revendications 5 à 9,
comportant l'étape supplémentaire suivante :
la commande de la buse mobile (3) par un actionneur (15) par l'intermédiaire d'une unité de commande (14).

11. Procédé de combustion de déchets selon l'une quelconque des revendications 5 à 10,
comportant les une ou plusieurs étapes supplémentaires suivantes :
la génération d'une énergie électrique par une turbine (7) à partir de l'énergie thermique du gaz résultant et
le stockage d'énergie électrique produite par un générateur entraîné par la turbine (7) dans un appareil de stockage d'énergie et/ou
l'alimentation de l'appareil (1) avec l'énergie électrique produite par le générateur entraîné par la turbine (7).

12. Procédé de combustion de déchets selon l'une quelconque des revendications 5 à 11,
comportant les une ou plusieurs étapes supplémentaires suivantes :
le chargement des déchets dans une zone de séchage (9) par l'intermédiaire d'un volet (11) ouvrable et/ou
le séchage des déchets dans une zone de séchage (9)
en utilisant l'énergie thermique du gaz résultant et/ou
le façonnage des déchets à une taille souhaitée et dans une forme souhaitée.

13. Procédé de combustion de déchets selon la revendication 12,
comportant l'étape supplémentaire suivante :
la permission à de l'air ambiant de s'écouler dans la zone de séchage (9).
